# EUROPÄISCHE PATENTSCHRIFT

(11) **EP 2 302 086 B1**
(45) Veröffentlichungstag und Bekanntmachung des Hinweises auf die Patenterteilung: **29.05.2013**
(21) Anmeldenummer: 09170293.6
(22) Anmeldetag: 15.09.2009
(51) Int. Cl.: B23K 20/04

(54) **Korrosionsbeständiger Aluminiumverbundwerkstoff für eine Fahrzeugkarosserie**
Corrosion-resistant clad aluminium sheet for a vehicle bodywork
Tôle en aluminium plaquée résistant à la corrosion pour une carrosserie de véhicule

(43) Veröffentlichungstag der Anmeldung: 30.03.2011
(73) Patentinhaber: Hydro Aluminium Rolled Products GmbH, 41515 Grevenbroich (DE)
(72) Erfinder: Brinkman, Henk-Jan, 53175 Bonn (DE); Mrotzek, Manfred, 21614 Buxtehude (DE); Engler, Olaf, 53229 Bonn (DE); Schröder, Dietmar, 41515 Grevenbroich (DE); Wirtz, Thomas, 22175 Hamburg (DE); Kehl, Werner, 21635 Jork (DE)
(74) Vertreter: Cohausz & Florack

(56) Entgegenhaltungen:
- FR-A1- 2 877 877
- JP-A- 6 228 690
- JP-A- 6 228 691

## Beschreibung

Die Erfindung betrifft einen Aluminiumverbundwerkstoff umfassend eine Aluminiumkernlegierungsschicht mit mindestens einer ein- oder beiseitigen äußerenAluminiumlegierungsschicht. Neben dem Aluminiumverbundwerkstoff und dessen vorteilhafter Verwendung betrifft die vorliegende Erfindung auch ein Verfahren zur Herstellung des Aluminiumverbundwerkstoffs.

Hochfeste Aluminiumlegierungen, unter anderem Aluminiumlegierungen mit Magnesiumanteilen von 3 Gew.-% bis 7 Gew.-% werden beispielsweise im Kraftfahrzeugbau, bei der Herstellung von Luftfahrzeugen, im Schiffsbau oder bei der Herstellung von Schienenfahrzeugen verwendet. Sie zeichnen sich durch besonders hohe Festigkeiten bei gleichzeitig guten Umformeigenschaften aus und können daher vor allem zur Gewichtsreduktion von Bauteilen, die großen Kräften oder Belastungen ausgesetzt sind, beitragen. Problematisch bei diesen hochfesten, hochmagnesiumhaltigen Aluminiumlegierungen ist, dass diese zu interkristalliner Korrosion neigen und damit unter Last prinzipiell eine Bruchgefahr für die hergestellten Bauteile beim Auftreten interkristalliner Korrosion besteht. Um die Korrosionsproblematik zu entschärfen ist beispielsweise aus der deutschen Offenlegungsschrift DE 198 38 017 A1 bekannt, Mangan und Scandium in einem bestimmten Verhältnis der Aluminiumlegierung zuzulegieren, so dass die Korrosionsbeständigkeit der daraus hergestellten Bauteile verbessert wird. Das Zulegieren von Scandium ist jedoch im Hinblick auf die Recyclingfähigkeit der verwendeten Aluminiumwerkstoffe problematisch. Scandium stellt darüber hinaus einen sehr kostspieligen Legierungsbestandteil dar.

Ein Aluminiumverbundblech für die Karosserie eines Kraftfahrzeugs ist beispielsweise aus der europäischen Patentanmeldung EP 1 852 251 A1 bekannt. Bei diesem bekannten Blech ergeben sich aber auch Korrosionsprobleme aufgrund der hohen Magnesiumgehalte der äußeren Aluminiumlegierungsschichten.

Hiervon ausgehend liegt der vorliegenden Erfindung die Aufgabe zugrunde, einen Werkstoff für den Kraftfahrzeugbau,

Flugzeugbau, Schiffsbau und Schienenfahrzeugbau zur Verfügung zu stellen, welcher hervorragende Festigkeitswerte mit einer guten Umformbarkeit sowie einer hohen Korrosionsbeständigkeit kombiniert.

Gemäß einer ersten Lehre der vorliegenden Erfindung wird die oben aufgezeigte Aufgabe durch einen Aluminiumverbundwerkstoff gemäß Anspruch 1 gelöst.

Die Aluminiumkernlegierungsschicht gewährleistet aufgrund der hohen Magnesium-Gehalte eine hervorragende Festigkeit, welche gerade in Anwendungsbereichen, wie beispielsweise Kraftfahrzeugbau, Flugzeugbau oder Schienenfahrzeug- und Schiffsbau benötigt wird. Die Beständigkeit dieser Aluminiumkernlegierungsschicht gegenüber interkristalliner Korrosion wird durch die äußere Aluminiumlegierungsschicht verbessert, welche einen reduzierten Magnesiumgehalt von maximal 1,1 Gew.-% aufweist. Die äußere Aluminiumlegierungsschicht ist aufgrund des Mg-Gehaltes unempfindlich gegenüber interkristalliner Korrosion, so dass die Aluminiumkernlegierungsschicht zumindest auf der Seite, auf der die äußere Aluminiumlegierungsschicht angeordnet ist, vor dem Einsetzen interkristalliner Korrosion geschützt ist. Der erfindungsgemäße Aluminiumverbundwerkstoff kann beispielsweise auch in Umgebungen mit erhöhten Temperaturen, beispielsweise im Bereich von 70 °C bis 180 °C, verwendet werden, ohne dass es zu Problemen hinsichtlich der Korrosionsbeständigkeit kommt. Damit ist der erfindungsgemäße Aluminiumsverbundwerkstoff vor allem für Anwendungsbereiche in Kraftfahrzeugen, Schienenfahrzeugen, Flugzeugen und Schiffen hervorragend geeignet, welche erhöhte Temperaturanforderungen umfassen. Im Hinblick auf die Aluminiumkernlegierungsschicht gewährleistet der Magnesiumgehalt von mehr als 3,5 Gew.-% bis 7,0 Gew.-% eine sehr hohe Festigkeit der Aluminiumkernlegierungsschicht bei gleichzeitig sehr guter Umformbarkeit. Die Begrenzung des Mangangehaltes auf maximal 1,0 Gew.-%, des Eisengehaltes auf maximal 0,5 Gew.-% sowie des Siliziumgehaltes auf 0,4 Gew.-% führt dazu, dass in Kombination mit den hohen Magnesium-Gehalten keine groben Ausscheidungen im Herstellprozess der Aluminiumkernlegierung gebildet werden, welche prinzipiell das Umformverhalten der Aluminiumkernlegierungsschicht negativ beeinflussen würden. Kupfer kann bis zu maximal 0,15 Gew.-% zulegiert werden, um die Festigkeit der Aluminiumkernlegierung zu verbessern, ohne dabei die Korrosionsbeständigkeit zu gefährden. Ferner kann die Aluminiumkernlegierung bis zu 0,25 Gew.-% Chrom enthalten, um die Korrosionsbeständigkeit der Kernlegierung zu verbessern und gleichzeitig eine geringe Korngröße zu erzielen, wobei grobe Phasen bei diesen Gehalten vermieden werden. Eine gute Schweißbarkeit wird dadurch erreicht, dass der Zink-Gehalt maximal 0,25 Gew.-% beträgt. Darüber hinaus trägt ein Titangehalt von maximal 0,2 Gew.-% ebenfalls zur Kornfeinung bei. Die Beständigkeit gegenüber interkristalliner Korrosion wird, wie bereits erwähnt, im Wesentlichen durch die äußere Aluminiumlegierungsschicht mit einem Magnesium-Gehalt von maximal 1,1 Gew.-% erzielt. Die reduzierten Gehalte an Mangan von maximal 1,3 Gew.-%, Eisen von maximal 0,5 Gew.-% und Silizium von maximal 0,3 Gew.-% verringern deren Tendenz zur Bildung von groben Ausscheidungen in der ersten äußeren Aluminiumlegierungsschicht und verbessern ebenfalls die Beständigkeit gegenüber interkristalliner Korrosion. Kupfer kann in der äußeren Aluminium- oder Aluminiumlegierungsschicht bis zu maximal 0,2 Gew. - % zulegiert werden, um die Festigkeit dieser Aluminium- oder Aluminiumlegierungsschicht zu verbessern, ohne Korrosionsprobleme zu verursachen. Ferner kann die äußere Aluminium- oder Aluminiumlegierungsschicht bis zu 0,15 Gew.-% Chrom enthalten, um ebenfalls die Korrosionsbeständigkeit zu verbessern, die Korngröße zu verringern und gleichzeitig grobe Phasen zu vermeiden. Eine gute Schweißbarkeit wird dadurch erreicht, dass der Zink-Gehalt maximal 0,25 Gew.-% beträgt. Darüber hinaus ergibt ein Titangehalt von maximal 0,2 Gew.-% eine verbesserte Kornfeinung. Optional kann die Untergrenze für den Mg-Gehalt der äußeren Aluminiumlegierungsschicht auf mindestens 0,5 Gew.-% angehoben werden, um eine Mindestfestigkeit der äußeren Aluminiumlegierungsschicht zu garantieren. Dadurch, dass die äußeren Aluminium- oder Aluminiumlegierungsschichten auf die Kernaluminiumlegierungsschicht walzplattiert sind, ergibt sich darüber hinaus eine besonders homogene Struktur des Aluminiumverbundwerkstoffs, d.h. in Bezug auf die Dicke, Oberfläche und Zusammensetzung der Aluminiumverbundwerkstoffschichten. Die Folge ist ein homogeneres Verarbeitungs- und Korrosionsverhalten in der Anwendung.

Zwischen der ersten äußeren Aluminiumlegierungsschicht und der Aluminiumkernlegierungsschicht ist eine Zwischenschicht aus einer Aluminiumlegierung vorgesehen, welche einen geringeren Mg-Gehalt aufweist als die äußere Aluminiumlegierungsschicht. Diese Zwischenschicht ist aufgrund des geringeren Mg-Gehaltes weicher und dient bei der Herstellung dazu, die äußere Aluminiumlegierungsschicht besser mit der Aluminiumkernlegierungsschicht verbinden zu können.

In Verbindung mit der Zwischenschicht hat es sich gezeigt, dass aufgrund des geringeren Mg-Gehaltes dieser Schicht folgende Zusammensetzungen für die äußere Aluminiumlegierungsschichten in Gewichtsprozent

| | |
|---|---|
| Mg | ≤ 3,0 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |

Rest Al und Verunreinigungen einzeln maximal 0,05 % in Summe maximal 0,15 % ebenfalls in Frage kommen, ohne die gewünschte Beständigkeit gegen interkristalline Korrosion des Aluminiumverbundwerkstoffs zu gefährden. Dies gilt vor allem unter Berücksichtigung eines beidseitig beschichteten, also eines mindestens fünflagigen Aluminiumverbundwerkstoffs und unter Berücksichtigung der die für eine Verwendung als Karosserieteil zu berücksichtigenden geringen. Dicken von 0,5 mm bis 2,5 mm. Auch hier kann optional ein Mindestgehalt an Magnesium von 0,5 Gew.-% in der äußeren Aluminium- oder Aluminiumlegierungsschicht vorgesehen sein.

Vorzugsweise besteht die Zwischenschicht aus einer Aluminiumlegierung vom Typ 1xxx, 3xxx oder 8xxx, welche die notwendigen niedrigen Mg-Gehalte aufweisen. Sehr gute Ergebnisse in Bezug auf die Verbindung der äußeren Aluminiumlegierungsschicht mit der Aluminiumkernlegierungsschicht wurden beispielsweise mit einer Zwischenschicht aus Reinaluminium 99,5 erzielt.

Die Aluminiumkernlegierungsschicht des erfindungsgemäßen Aluminiumverbundwerkstoffs kann gemäß einer weiteren Ausführungsform des erfindungsgemäßen Aluminiumverbundwerkstoffs gegenüber interkristalliner Korrosion dadurch besser geschützt werden, dass eine zweite äußere Aluminiumlegierungsschicht vorgesehen ist, welche auf der gegenüberliegenden Seite der Aluminiumkernlegierungsschicht angeordnet ist, und optional zwischen der Aluminiumkernlegierungsschicht und der zweiten äußeren Aluminiumlegierungsschicht eine zweite Zwischenschicht aus einer Aluminiumlegierung vorgesehen ist, welche einen geringeren Mg-Gehalt als die äußere Aluminiumlegierungsschicht aufweist. Diese Ausführungsform des erfindungsgemäßen Aluminiumverbundwerkstoffs entspricht damit einem Sandwich von äußeren Aluminiumlegierungsschichten mit niedrigem Magnesiumgehalt und einer innen liegenden Aluminiumkernlegierungsschicht mit sehr hohem Magnesiumgehalt. Die äußeren Aluminiumlegierungsschichten und damit der gesamte Aluminiumverbundwerkstoff weist dann einerseits eine besonders gute Beständigkeit gegenüber interkristalliner Korrosion auf und stellt andererseits eine besonders hohe Festigkeiten durch die Kernschicht zur Verfügung. Die äußeren Aluminiumlegierungsschichten können in ihren Legierungszusammensetzungen innerhalb der Spezifikation der ersten äußeren Aluminiumlegierungsschicht aber auch in ihren Schichtdicken unterschiedlich sein, um eine optimale Anpassung an das Einsatzgebiet des erfindungsgemäßen Aluminiumverbundwerkstoffs zu gewährleisten. Die Zwischenschicht zwischen den äußeren Aluminiumlegierungsschichten und der Kernlegierungsschicht dient dazu, den Herstellprozess zu vereinfachen.

Betragen die Schichtdicken der äußeren
Aluminiumlegierungsschichten 1 % bis 12 %, vorzugsweise 3 % bis 8 % der Gesamtdicke des Aluminiumverbundwerkstoffs, ist der Volumenanteil der Aluminiumkernlegierungsschicht an dieser erfindungsgemäßen Ausführungsform des Aluminiumverbundwerkstoffs besonders groß, so dass höchste Festigkeiten erreicht werden können. Gleichzeitig reichen die Schichtdicken der ein- oder beidseitig vorgesehenen äußeren Aluminiumlegierungsschichten aus, den gewünschten Korrosionsschutz zu gewährleisten.

Die bevorzugte Gesamtdicke des Aluminiumverbundwerkstoffs von 0,5 mm bis 2,5 mm führt zu einer optimalen Eignung des erfindungsgemäßen Aluminiumverbundwerkstoffs für Karosserieteile eines Kraftfahrzeugs, da Leichtbauweise mit hoher Festigkeit und guter Korrosionsbeständigkeit kombiniert werden.

Gemäß einer zweiten Lehre der vorliegenden Erfindung wird die oben aufgezeigte Aufgabe dadurch gelöst, dass ein erfindungsgemäßer Aluminiumverbundwerkstoff im Kraftfahrzeugbau, Flugzeugbau, Schiffsbau und Schienenfahrzeugbau, insbesondere als Karosserieblech verwendet wird. Der erfindungsgemäße Aluminiumverbundwerkstoff weist für diese Anwendungen, vor allem Anwendungen in Umgebungen mit erhöhten Temperaturen, beispielsweise mit Temperaturen im Bereich von 70 °C bis 180 °C, eine hervorragende Beständigkeit gegenüber interkristalliner Korrosion bei gleichzeitiger Bereitstellung sehr guter Festigkeitswerte bei geringen Wanddicken und geringem Gesamtgewicht auf. Der erfindungsgemäße Aluminiumverbundwerkstoff kann aber auch vorteilhaft im Kraftfahrzeugbau für Fahrwerksteile oder Strukturteile der Karosserie verwendet werden.

Gemäß einer dritten Lehre der vorliegenden Erfindung wird die oben aufgezeigt Aufgabe gelöst durch ein Verfahren zur Herstellung eines Aluminiumverbundwerkstoffs gemäß Anspruch 5.

Im Hinblick auf die Vorteile des erfindungsgemäß hergestellten Aluminiumverbundwerkstoffs wird auf die Ausführungen zum erfindungsgemäßen Aluminiumverbundwerkstoff verwiesen. Das Plattierwalzen ist per Definition ein Warmwalzschritt und soll den beteiligten Kernbarren und den Plattierwerkstoff miteinander verschweißen. Die hohen Temperaturen des Werkstoffs von etwa 250 °C bis 550 °C während des Plattierwalzens gewährleisten zusammen mit der während des Plattierwalzens, also durch die Umformung, auftretenden Erwärmung des gewalzten Werkstoffs, dass der Kernbarren und der aufgelegte Plattierwerkstoff miteinander verschweißen, so dass eine fest verbundene, äußere Aluminiumlegierungsschicht erzeugt wird. Bei der Herstellung des erfindungsgemäßen Aluminiumverbundwerkstoffs, welcher aus zwei Aluminiumschichten mit sehr unterschiedlichen Festigkeitseigenschaften und damit Walzeigenschaften besteht, hat es sich herausgestellt, dass das Plattierwalzen, jeweils mit einem Leerstich in einer Walzrichtung erfolgen sollte, um prozesssicher zu einer ausreichend stabilen Verbindung zwischen Kernbarren und der äußeren Aluminiumlegierungsschicht zu gelangen. Dies ist Folge der außergewöhnlichen Festigkeit des Kernwerkstoffs mit 3,5 Gew.-% bis 7,0 Gew.-% Magnesium. Als Leerstich wird ein Durchlauf durch die Arbeitswalzen bezeichnet, bei welchem keine Dickenabnahme des zu walzenden Werkstoffs durch die Arbeitswalzen erfolgt. Der Walzspalt wird hierzu ein wenig geöffnet, bevor der Barren in Leerstichrichtung die Arbeitswalzen passiert. Es hat sich gezeigt, dass durch die Verwendung mindestens eines Leerstichs in einer Walzrichtung während des reversierenden Plattierwalzens die Herstellung des erfindungsgemäßen Aluminiumverbundwerkstoffs deutlich prozesssicherer wurde.

Der Plattierwerkstoff kann einerseits durch Warmwalzen eines Barrens aus einer Aluminiumlegierung mit einer Legierungszusammensetzung der äußeren Aluminiumlegierungsschicht hergestellt werden. Es besteht aber auch die Möglichkeit den Plattierwerkstoff durch Abtrennen unter Verwendung von Sägen von einem Barren aus einem Plattierwerkstoff herzustellen. Hierdurch wird der Schritt des Warmwalzens eingespart. Üblicherweise ist dann zusätzlich eine Oberflächenbearbeitung des Plattierwerkstoffs, beispielsweise durch Fräsen und Bürsten oder dergleichen notwendig, bevor der dieser aufplattiert werden kann.

Vorzugsweise wird während des reversierenden Plattierwalzens zumindest solange ein Leerstich durchgeführt, bis der Plattierwerkstoff mit der Aluminiumkernlegierungsschicht fest verschweißt ist. In diesem Fall kann die Zeit für das Plattierwalzen des erfindungsgemäßen Verbundwerkstoffs verringert werden, da anschließend wieder in beiden Richtungen reversierend warmgewalzt werden kann.

Eine Zwischenschicht zwischen der äußeren Aluminiumlegierungsschicht und der
Aluminiumkernlegierungsschicht ist vorgesehen, wobei die Zwischenschicht einen geringeren Mg-Gehalt als die äußere Aluminiumlegierungsschicht aufweist. Dadurch kann das Verbinden der Aluminiumkernlegierungsschicht mit den äußeren Aluminiumlegierungsschichten erleichtert werden. Die Zwischenschicht mit noch geringerem Mg-Gehalt ist weicher, so dass diese besonders schnell sowohl mit der äußeren Aluminiumlegierungsschicht und der Aluminiumkernlegierungsschicht verschweißt. Die Zwischenschicht besteht vorzugsweise aus einer 1xxx, 3xxx oder 8xxx Aluminiumlegierung.

Die Zwischenschicht kann besonders einfach gemäß einer weiteren Ausführungsform des erfindungsgemäßen Verfahrens dadurch bereitgestellt werden, dass der Aluminiumverbundwerkstoff durch Aufplattieren eines Verbundplattierwerkstoff hergestellt wird, wobei der Verbundplattierwerkstoff gleichzeitig die Zwischenschicht und die äußere Aluminiumlegierungsschicht bereitstellt.

Eine Steigerung der Prozesssicherheit während des reversierenden Plattierwalzens wird gemäß einer weiteren Variante dadurch erreicht, dass der Plattierwerkstoff über eine Schweißnaht an der kurzen Kernbarrenseite mit dem Kernbarren verschweißt ist. Es hat sich gezeigt, dass die bisher verwendete punktförmige Schweißverbindung zwischen dem Kernbarren und dem blechförmigen Plattierwerkstoff nicht ausreicht. Allerdings kann auch eine Vielzahl an Schweißpunkten, welche in dichtem Abstand gesetzt werden, die gleiche Wirkung wie eine Schweißnaht an der kurzen Kernbarrenseite erzielen.

Darüber hinaus hat sich gemäß einer weiteren Ausführungsform des erfindungsgemäßen Verfahrens gezeigt, dass es vorteilhaft ist, dass der Plattierwerkstoff zu Beginn des. Plattierwalzens eine geringere Länge aufweist als der Kernbarren, wobei vorzugsweise die Längendifferenz 3 % bis 20 % der Gesamtlänge des Kernbarrens beträgt. Durch die Wahl der Längen des Plattierwerkstoffs wird erreicht, dass am Ende des Plattierwalzens ein bandförmiger Aluminiumverbundwerkstoff bereitgestellt werden kann, welcher einerseits mit hoher Prozesssicherheit gefertigt werden kann und andererseits über die gesamte Länge mindestens eine äußere Aluminiumlegierungsschicht und eine Aluminiumkernlegierungsschicht aufweist. Selbstverständlich kann unter Berücksichtigung dieser Längendifferenz auch ein dreischichtiger Aluminiumverbundwerkstoff hergestellt werden, welcher über die gesamte Bandlänge den dreischichtigen Aufbau aufweist.

Vor dem Plattierwalzen wird der Kernbarren vorzugsweise homogenisiert. Die Homogenisierung kann ein oder mehrstufig erfolgen, wobei üblicherweise die Temperaturen im Bereich von 390 °C bis 550 °C betragen. Gute Ergebnisse beim Homogenisieren wurden erzielt, wenn der Kernbarren für eine Dauer von mindestens 0,5 h auf diesen Temperaturen gehalten wurde. Die Oberfläche des Kernbarrens wird nach dem Homogenisieren mechanisch bearbeitet, um beispielsweise ausgeschiedene Magnesiumoxidschichten zu entfernen. Vor dem Plattierwalzen kann der Kernbarren, vorzugsweise mit aufgebautem Plattierwerkstoff auf Walztemperatur vorgewärmt werden. Durch Fräsen und Bürsten oder andere Oberflächenbearbeitungsverfahren kann beispielsweise die Oberfläche des Kernbarrens in einen optimalen Zustand zur Durchführung des Plattierwalzens gebracht werden.

Nach dem Plattierwalzen wird der bandförmige Aluminiumverbundwerkstoff gemäß einer weiteren Ausführungsform des erfindungsgemäßen Verfahrens mit oder ohne Zwischenglühung kaltgewalzt und abschließend einer Weichglühung unterzogen, so dass die Umformbarkeit des Aluminiumverbundwerkstoffs maximal ist. Die Weichglühung kann allerdings alternativ auch unmittelbar vor dem Umformvorgang erfolgen.

Der Aluminiumverbundwerkstoff wird vorzugsweise auf eine Enddicke von 0,5 mm bis 2,5 mm gewalzt. Es hat sich gezeigt, dass dieser Dickenbereich optimal für die Verwendung des Aluminiumverbundwerkstoffs als Karosserieblech in Kraftfahrzeugen ist. Sicherlich sind auch andere vorteilhafte Anwendungen in diesen Dickenbereichen möglich.

Es gibt nun eine Vielzahl von Möglichkeiten den erfindungsgemäßen Aluminiumverbundwerkstoff, dessen Verwendung oder das Verfahren zur Herstellung des erfindungsgemäßen Aluminiumverbundwerkstoffs weiterzubilden und auszugestalten. Hierzu wird verwiesen auf die den Patentansprüchen 1 und 6 nachgeordneten Patentansprüche sowie auf die Beschreibung von Ausführungsbeispielen in Verbindung mit der Zeichnung. Die Zeichnung zeigt in
- Fig. 1: ein erstes Ausführungsbeispiel eines nicht erfindungsgemäßen Aluminiumverbundwerkstoffs in einer schematischen Schnittansicht,
- Fig. 2: in einer schematischen perspektivischen Ansicht einen Kernbarren mit aufgebautem Plattierwerkstoff vor dem Walzplattieren,
- Fig. 3: ein Ausführungsbeispiel eines erfindungsgemäßen Aluminiumverbundwerkstoffs in einer schematischen Schnittansicht,
- Fig. 4a) und 4b): ein Ausführungsbeispiel des erfindungsgemäßen Verfahrens zur Herstellung des Aluminiumverbundwerkstoffs und
- Fig. 5: ein Ausführungsbeispiel einer erfindungsgemäßen Verwendung des Aluminiumverbundwerkstoffs.

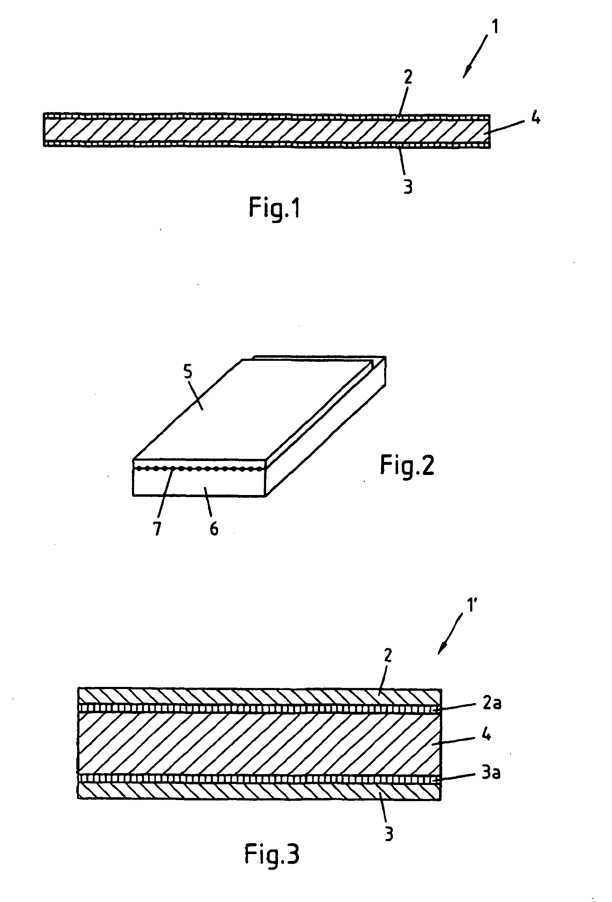

Figur 1 zeigt zunächst in einer schematischen Schnittansicht ein Ausführungsbeispiel eines nicht erfindungsgemäßen Aluminiumverbundwerkstoffs 1 mit zwei äußeren Aluminiumlegierungsschichten 2, 3 und einer Aluminiumkernlegierungsschicht 4. Die Aluminiumkernlegierungsschicht 4 hat folgenden Legierungsbestandteile in Gew.-%:

| | | |
|---|---|---|
| 3,5 % < | Mg | ≤ 7,0 %, |
| | Fe | ≤ 0,5 %, |
| | Si | ≤ 0,4 %, |
| | Cu | ≤ 0,2 %, |
| | Cr | ≤ 0,15 %, |
| | Zn | ≤ 0,25 %, |
| | Ti | ≤ 0,2 %, |

Rest Al mit unvermeidbaren Verunreinigungen, einzeln maximal 0,05 %, in Summe maximal 0,15 %. Die äußeren Aluminiumlegierungsschichten 2, 3 weisen die folgenden Legeierungsbestandteile in Gewichtsprozent auf:

| | | |
|---|---|---|
| 0,5 % ≤ | Mg | ≤ 1,1 %, |
| | Mn | ≤ 1,3 %, |
| | Fe | ≤ 0,5 %, |
| | Si | ≤ 0,3 %, |
| | Cu | ≤ 0,2 %, |
| | Cr | ≤ 0,15 %, |
| | Zn | ≤ 0,25 %, |
| | Ti | ≤ 0,2 %, |

Rest Aluminium und unvermeidbare Verunreinigungen einzeln maximal 0,05 % in Summe maximal 0,15 % und sind daher beständig gegenüber interkristalliner Korrosion. Der verringerte Mn-Gehalt dieses Beispiels verringert die Gefahr von groben Ausscheidungen in der äußeren Aluminiumlegierungsschicht und verbessert die Umformbarkeit des Aluminiumverbundwerkstoffs. Die Dicke des Aluminiumverbundwerkstoffs 1 beträgt zwischen 0,5 mm und 2,5 mm. Diese Wanddicken ergeben für die Anwendung als Karosserieteil eines Kraftfahrzeuges ein optimales Gewicht bei ausreichender Stabilität.

Die sehr hohen Festigkeiten des Aluminiumverbundwerkstoffs 1, welche durch die Aluminiumkernlegierungsschicht 4 bereitgestellt werden, werden aufgrund der hohen Korrosionsbeständigkeit auch in Anwendungsbereichen nutzbar, welche aufgrund der erhöhten Umgebungstemperaturen bisher nicht für derartige Aluminiumlegierungen in Frage kamen. Beispielsweise kann der Aluminiumverbundwerkstoff sehr gut für Karosseriebauteile eines Kraftfahrzeugs, welche im Bereich des Motors oder der Abgasführung vorgesehen sind, eingesetzt werden. Die erhöhten Temperaturen führen nämlich bei ungeschützter Aluminiumkernlegierungsschicht 4 zu einer Sensibilisierung derselben für interkristalline Korrosion und im weiteren Verlauf zur Schädigung dieser Schicht durch interkristalline Korrosion. Die äußeren Aluminiumlegierungsschichten 2,3 sind dagegen nicht anfällig für interkristalline Korrosion und schützen die hochfeste Aluminiumkernlegierungsschicht 4.

Bei der Herstellung des Aluminiumverbundwerkstoffs unter Verwendung eines Plattierwalzens wird zunächst, wie in Fig. 2 dargestellt, ein Plattierwerkstoff 5, welcher aus der Aluminiumlegierung der äußeren Aluminiumlegierungsschichten 2,3 besteht, auf einen Kernbarren 6 aus einer Aluminiumkernlegierung aufgebaut und vorzugsweise über eine durchgehende Schweißnaht 7 an der kurzen Kernbarrenseite mit diesem verschweißt. Die Schweißnaht 7 kann, wie bereits ausgeführt, aber auch durch eng gesetzte Schweißpunkte hergestellt werden und eine ausreichende Befestigung des Plattierwerkstoffs 5 auf dem Kernbarren 6 ergeben.

Fig. 3 zeigt in einer vergrößerten schematischen Schnittansicht ein Ausführungsbeispiel eines erfindungsgemäßen Aluminiumverbundwerkstoffs 1', welcher beidseitig mit einem zweischichtigen Plattierwerkstoff 2, 2a, 3, 3a plattiert ist. Die Zwischenschichten 2a und 3a bestehen aus einer Aluminiumlegierung vom Typ 1xxx, 3xxx oder 8xxx und weisen einen geringeren Mg-Gehalt als die äußeren Aluminiumlegierungsschichten 2,3 auf. Sie dienen dazu, um auf die sehr harte Aluminiumkernlegierungsschicht 4 gemäß Beispiel aus Fig. 1 die äußeren Aluminiumlegierungsschichten 2,3 gemäß Beispiel aus Fig. 1 besser aufplattieren zu können. Dadurch, dass die Zwischenschichten 2a, 3a relativ weich sind, erfolgt beim Plattierwalzen selbst eine schnellere Verschweißung der äußeren Aluminiumlegierungsschichten 2,3 mit der

Aluminiumkernlegierungsschicht 4. Die Zwischenschichten können entweder durch Walzplattieren der äußeren Aluminiumlegierungsschichten 2,3 oder getrennt von diesen bereitgestellt werden. Die Zwischenschichtdicke beträgt beim fertig gewalzten Aluminiumverbundwerkstoff weniger als 100 µm.

Nach dem Aufbauen des Kernbarrens mit dem Plattierwerkstoff erfolgt ein reversierendes Plattierwalzen, wobei der Kernbarren 6, vor dem Zusammenbau des Kernbarrens 6 und des Plattierwerkstoffs 5 homogenisiert wird. Anschließend an das Homogenisieren wird die Oberfläche des Kernbarrens 6 durch Fräsen und anschließendes Bürsten auf den Plattiervorgang vorbereitet. Der Kernbarren 6 und der Plattierwerkstoff 5 werden anschließend auf Warmwalztemperatur vorgewärmt.

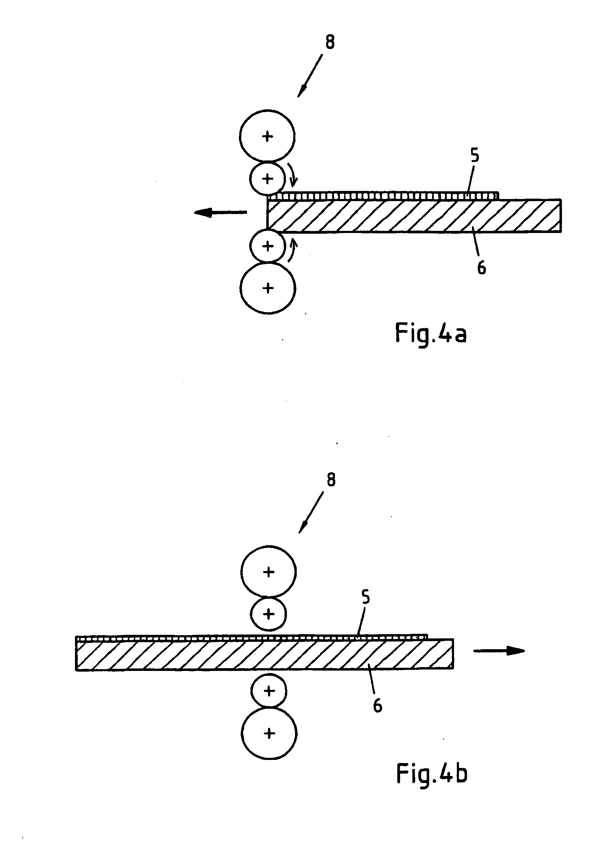

Das Warmwalzen bzw. Plattierwalzen ist schematisch in der Figur 4a) und 4b) schematisch dargestellt. Beim reversierenden Walzen wird in einer Richtung, wie in Figur 4a) dargestellt, unter Verwendung eines Warmwalzgerüstes 8 eine Dickenabnahme durchgeführt, wobei gleichzeitig der aufgelegte Plattierwerkstoff 5 mit dem Aluminiumkernlegierungsbarren 6 verschweißt. Bei der anschließenden reversierenden Bewegung des dickenverringerten Kernbarrens 6 mit aufgelegtem blechförmigen Plattierwerkstoff 5 erfolgt, wie in Figur 4b) dargestellt, in einer Walzrichtung keine Dickenabnahme, da der Walzspalt leicht geöffnet wird. Es erfolgt also in dieser Walzrichtung ein Leerstich. Während des Leerstichs wird keine Dickenabnahme des Walzgutes erzielt.

Wie Figur 4a) und 4b) zeigen, weisen der aufgebaute Plattierwerkstoff 5 und der Kernbarren 6 nicht die gleiche Länge auf. Hierdurch wird berücksichtigt, dass während des Plattierwalzens aufgrund der hohen Härte des Kernbarrens 6 der Plattierwerkstoff 5 eine größere Streckung vollzieht, so dass das fertig plattiergewalzte Band aus Aluminiumverbundwerkstoff vorzugsweise eine durchgehende, äußere Aluminiumlegierungsschicht aus dem Plattierwerkstoff 5 aufweist. Die Längendifferenz zwischen Kernbarren und Plattierwerkstoff beträgt zwischen 3 % und 20 %.

Nach dem Plattierwalzen kann der bandförmige Aluminiumverbundwerkstoff 1 noch einem Kaltwalzen unterzogen werden, wobei das Kaltwalzen in den Figuren nicht dargestellt ist. Das Kaltwalzen kann mit oder ohne Zwischenglühung erfolgen. Vorteilhaft ist insbesondere, wenn eine Weichglühung vor dem Umformen des Aluminiumverbundwerkstoffs zum Bauteil erfolgt. Dies kann entweder bandförmig im Anschluss an das Kaltwalzen durchgeführt werden oder unmittelbar vor dem Umformvorgang an der Umformvorrichtung.

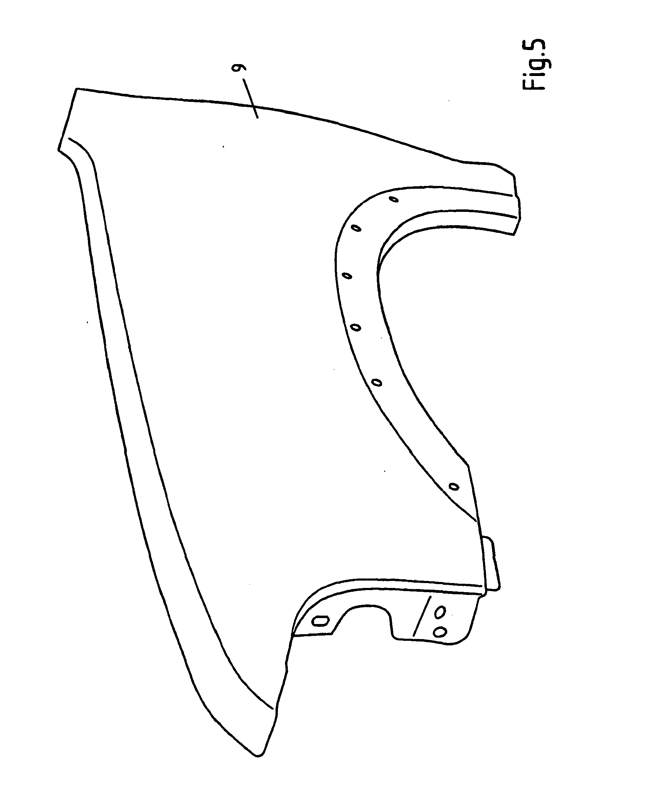

Im Ergebnis können Bauteile hergestellt werden, welche aufgrund des verwendeten Aluminiumverbundwerkstoffs 1 nicht nur in Umgebungen mit erhöhten Temperaturen, beispielsweise in Temperaturbereichen von 70 bis 180 °C, eingesetzt werden können, sie weisen auch eine besonders hohe Belastbarkeit auf. Eine typische Verwendung des erfindungsgemäßen Aluminiumverbundwerkstoffs, beispielsweise für den Kraftfahrzeugbau, ist in Figur 5 dargestellt. Figur 5 zeigt in einer schematischen Ansicht einen Kotflügel 9 eines Kraftfahrzeuges, hergestellt aus einem erfindungsgemäßen Aluminiumverbundwerkstoff 1. Der Kotflügel 9 kann aufgrund der hohen Festigkeit des Aluminiumverbundwerkstoffs 1 mit sehr geringer Wanddicke hergestellt werden, ohne dass es zu Problemen hinsichtlich der Festigkeitserfordernisse kommt.

Insgesamt trägt der erfindungsgemäße Aluminiumverbundwerkstoff dazu bei, neue Anwendungen und weitere Gewichtsreduzierungen im Bereich des Kraftfahrzeugbaus, des Flugzeugbaus, des Schienenfahrzeugbaus und des Schiffbaus zu erschließen.

## Patentansprüche

1. Aluminiumverbundwerkstoff (1) umfassend eine Aluminiumkernlegierungsschicht (4) mit mindestens einer ein- oder beidseitigen äußeren Aluminiumlegierungsschicht (2,3), wobei die Aluminiumkernlegierungsschicht (4) die folgenden Legierungsbestandteile in Gewichtsprozent aufweist:
| | | |
|---|---|---|
| 3,5 % < | Mg | ≤ 7,0 %, |
| | Mn | ≤ 1,0 %, |
| | Fe | ≤ 0,5 %, |
| | Si | ≤ 0,4 %, |
| | Cu | ≤ 0,15 %, |
| | Cr | ≤ 0,25 %, |
| | Zn | ≤ 0,25 %, |
| | Ti | ≤ 0,2 %, |
Rest Al mit Verunreinigungen einzeln maximal 0,05 % in Summe maximal 0,15 % und die äußere Aluminiumlegierungsschicht (2,3) aus einer Aluminiumlegierung besteht, welche die folgenden Legierungsbestandteile in Gewichtsprozent aufweist:
| | |
|---|---|
| Mg | ≤ 1,1 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |
Rest Aluminium und unvermeidbare Verunreinigungen einzeln maximal 0,05 % in Summe maximal 0,15 %,
**dadurch gekennzeichnet**, d a s s zwischen der äußeren Aluminiumlegierungsschicht und der Aluminiumkernlegierungsschicht eine Zwischenschicht aus Aluminium oder einer Aluminiumlegierung vorgesehen ist, welche einen geringeren Mg-Gehalt als die äußere Aluminiumlegierungsschicht aufweist.

2. Aluminiumverbundwerkstoff nach Anspruch 1,
**dadurch gekennzeichnet**, d a s s die Zwischenschicht aus Aluminium vom Typ 1xxx oder einer Aluminiumlegierung vom Typ 3xxx oder 8xxx besteht.

3. Aluminiumverbundwerkstoff nach Anspruch 1 oder 2,
**dadurch gekennzeichnet, dass** die Schichtdicken der äußeren Aluminiumlegierungsschichten (2,3) 1 % bis 12 %, vorzugsweise 3 % bis 8 % der Gesamtdicke des Aluminiumverbundwerkstoffs (1) betragen.

4. Verwendung eines Aluminiumverbundwerkstoffs nach einem der Ansprüche 1 bis 3 im Fahrzeugbau, Flugzeugbau, Schiffsbau und Schienenfahrzeugbau, insbesondere als Karosserieblech im Kraftfahrzeugbau.

5. Verfahren zur Herstellung eines Aluminiumverbundwerkstoffs mit einer Aluminiumkernlegierungsschicht mit mindestens einer ein- oder beidseitigen äußeren Aluminiumlegierungsschicht gemäß einem der Ansprüche 1 bis 3, bei welchem ein Kernbarren für die
Aluminiumkernlegierungsschicht aus einer Aluminiumlegierung mit folgenden Legierungsbestandteilen in Gewichtsprozent
| | | |
|---|---|---|
| 3,5 % < | Mg | ≤ 7,0 %, |
| | Mn | ≤ 1,0 %, |
| | Fe | ≤ 0,5 %, |
| | Si | ≤ 0,4 %, |
| | Cu | ≤ 0,15 %, |
| | Cr | ≤ 0,25 %, |
| | Zn | ≤ 0,25 %, |
| | Ti | ≤ 0,2 %, |
Rest Al mit unvermeidbaren Verunreinigungen einzeln maximal 0,05 % in Summe maximal 0,15 % und
für die mindestens eine äußere Aluminiumlegierungsschicht ein Plattierwerkstoff aus Aluminium oder einer Aluminiumlegierung mit den folgenden Legierungsbestandteilen in Gewichtsprozent
| | |
|---|---|
| Mg | ≤ 1,1 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |
Rest Aluminium und Verunreinigungen einzeln maximal 0,05 % in Summe maximal 0,15 %
bereitgestellt wird, der für die äußere Aluminiumlegierungsschicht bereitgestellte Plattierwerkstoff zumindest einseitig auf den Kernbarren bestehend aus der Aluminiumkernlegierung gebaut wird, während des reversierenden Plattierwalzens des Kernbarrens mit aufgebautem Plattierwerkstoff in einer Walzrichtung mindestens ein Leerstich erfolgt, wobei eine Zwischenschicht zwischen der äußeren Aluminiumlegierungsschicht und der Aluminiumkernlegierungsschicht vorgesehen ist, die Zwischenschicht einen geringeren Mg-Gehalt als die äußere Aluminiumlegierungsschicht aufweist, und beide Schichten auf den Kernbarren aufplattiert werden.

6. Verfahren nach Anspruch 5,
**dadurch gekennzeichnet, dass** während des reversierenden Plattierwalzens zumindest solange in eine Walzrichtung ein Leerstich durchgeführt wird, bis der Plattierwerkstoff mit der Aluminiumkernlegierungsschicht fest verschweißt ist.

7. Verfahren nach Anspruch 5 oder 6,
**dadurch gekennzeichnet**, d a s s der Aluminiumverbundwerkstoff durch Aufplattieren eines Verbundplattierwerkstoff hergestellt wird, wobei der Verbundplattierwerkstoff gleichzeitig die Zwischenschicht und die äußere Aluminiumlegierungsschicht bereitstellt.

8. Verfahren nach einem der Ansprüche 5 bis 7,
**dadurch gekennzeichnet**, d a s s der Plattierwerkstoff über eine Schweißnaht an der kurzen Kernbarrenseite mit dem Kernbarren verschweißt wird.

9. Verfahren nach einem der Ansprüche 5 bis 8,
**dadurch gekennzeichnet, dass** der Plattierwerkstoff zu Beginn des Plattierwalzens eine geringere Länge aufweist als der Kernbarren, wobei vorzugsweise die Längendifferenz 3 % bis 20 % der Gesamtlänge des Kernbarrens beträgt.

10. Verfahren nach einem der Ansprüche 5 bis 9,
**dadurch gekennzeichnet**, d a s s nach dem Plattierwalzen das Band aus dem Aluminiumverbundwerkstoff mit oder ohne Zwischenglühung kaltgewalzt wird und optional eine abschließende Weichglühung stattfindet.

11. Verfahren nach einem der Ansprüche 5 bis 10,
**dadurch gekennzeichnet**, d a s s der Aluminiumverbundwerkstoff auf eine Enddicke von 0,5 mm bis 2,5 mm gewalzt wird.

## Claims

1. An aluminium composite material (1) comprising an aluminium core alloy layer (4) having at least one outer aluminium alloy layer (2, 3) on one or both sides, wherein the aluminium core alloy layer (4) comprises the following alloy constituents in % by weight:
| | | |
|---|---|---|
| 3,5 % < | Mg | ≤ 7,0 %, |
| | Mn | ≤ 1,0 %, |
| | Fe | ≤ 0,5 %, |
| | Si | ≤ 0,4 %, |
| | Cu | ≤ 0,15 %, |
| | Cr | ≤ 0,25 %, |
| | Zn | ≤ 0,25 %, |
| | Ti | ≤ 0,2 %, |
the rest being formed by Al containing impurities of 0.05 % at most in each case and with a maximum total of 0.15 %, and the outer aluminium alloy layer (2, 3) consists of an aluminium alloy, which comprises the following alloy constituents in % by weight:
| | |
|---|---|
| Mg | ≤ 1,1 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |
the rest being formed by Al and unavoidable impurities of 0.05 % at most in each case and with a maximum total of 0.15 %,
**characterised in that** an intermediate layer formed of aluminium or an aluminium alloy is provided between the outer aluminium alloy layer and the aluminium core alloy layer, which has a lower Mg content than the outer aluminium alloy layer.

2. The aluminium composite material according to claim 1, **characterised in that** the intermediate layer consists of aluminium of the 1xxx type or of an aluminium alloy of the 3xxx type or 8xxx type.

3. The aluminium composite material according to one of claims 1 or 2, **characterised in that** the layer thicknesses of the outer aluminium alloy layers (2, 3) are 1 % to 12 %, preferably 3 % to 8 %, of the total thickness of the aluminium composite material (1).

4. Use of an aluminium composite material according to one of claims 1 to 3 in vehicle construction, aircraft construction, shipbuilding and rail vehicle construction, in particular as a body sheet in motor vehicle construction.

5. A method for producing an aluminium composite material with an aluminium core alloy layer having at least one outer aluminium alloy layer on one or both sides according to one of claims 1 to 3, in which method a core ingot for the aluminium core alloy layer formed of an aluminium alloy containing the following alloy constituents in % by weight
| | | |
|---|---|---|
| 3,5 % < | Mg | ≤ 7,0 %, |
| | Mn | ≤ 1,0 %, |
| | Fe | ≤ 0,5 %, |
| | Si | ≤ 0,4 %, |
| | Cu | ≤ 0,15 %, |
| | Cr | ≤ 0,25 %, |
| | Zn | ≤ 0,25 %, |
| | Ti | ≤ 0,2 %, |
the rest being formed by Al containing unavoidable impurities of 0.05 % at most in each case and with a maximum total of 0.15, is provided, and
a cladding material made of aluminium or an aluminium alloy containing the following alloy constituents in % by weight:
| | |
|---|---|
| Mg | ≤ 1,1 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |
the rest being formed by Al and impurities of 0.05 % at most in each case and with a maximum total of 0.15 %, is provided for the at least one outer aluminium alloy layer, the cladding material provided for the outer aluminium alloy layer is formed at least on one side of the core ingot consisting of the aluminium core alloy, at least one empty pass is carried out during the reverse clad rolling of the core ingot with formed cladding material in one rolling direction, wherein an intermediate layer is provided between the outer aluminium alloy layer and the aluminium core alloy layer, the intermediate layer has a lower Mg content than the outer aluminium alloy layer, and both layers are clad onto the core ingot.

6. The method according to claim 5, **characterised in that** an empty pass is carried out during the reverse clad rolling in one rolling direction, at least until the cladding material is welded fixedly to the aluminium core alloy layer.

7. The method according to claim 5 or 6, **characterised in that** the aluminium composite material is produced by cladding on a composite cladding material, wherein the composite cladding material simultaneously provides the intermediate layer and the outer aluminium alloy layer.

8. The method according to one of claims 5 to 7, **characterised in that** the cladding material is welded to the core ingot by a weld seam at the short core ingot side.

9. The method according to one of claims 5 to 8, **characterised in that** the cladding material is shorter than the core ingot at the start of the roll-cladding process, wherein the difference in length is preferably 3 % to 20 % of the total length of the core ingot.

10. The method according to one of claims 5 to 9, **characterised in that**, once the clad-rolling process is complete, the band formed from the aluminium composite material is cold-rolled, either with or without intermediate annealing, and subsequent soft annealing is optionally carried out.

11. The method according to one of claims 5 to 10, **characterised in that** the aluminium composite material is rolled to an end thickness of 0.5 mm to 2.5 mm.

## Revendications

1. Matériau composite d'aluminium (1) comprenant une couche centrale en alliage d'aluminium (4) pourvue d'au mois une couche extérieure en alliage d'aluminium (2, 3) située sur un côté ou sur les deux, la couche centrale en alliage d'aluminium (4) présentant les composants d'alliage suivants, en pour cent en poids :
| | | |
|---|---|---|
| 3,5 % < | Mg | ≤ 7,0 %, |
| | Mn | ≤ 1,0 %, |
| | Fe | ≤ 0,5 %, |
| | Si | ≤ 0,4 %, |
| | Cu | ≤ 0,15 %, |
| | Cr | ≤ 0,25 %, |
| | Zn | ≤ 0,25 %, |
| | Ti | ≤ 0,2 %, |
le reste étant de l'Al avec des impuretés dont chacune représente au maximum 0,05 %, leur somme représentant au maximum 0,15 %, et la couche extérieure en alliage d'aluminium (2, 3) étant constituée d'un alliage d'aluminium présentant les composants d'alliage suivants, en pour cent en poids :
| | |
|---|---|
| Mg | ≤ 1,1 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |
le reste étant de l'aluminium et des impuretés inévitables dont chacune représente au maximum 0,05 %, leur somme représentant au maximum 0,15 %,
**caractérisé en ce qu'**entre ladite couche extérieure en alliage d'aluminium et ladite couche centrale en alliage d'aluminium, on met en oeuvre une couche intermédiaire en alliage d'aluminium présentant une teneur en Mg inférieure par rapport à la couche extérieure en alliage d'aluminium.

2. Matériau composite d'aluminium selon la revendication 1,
**caractérisé en ce que** ladite couche intermédiaire est constituée d'aluminium de type 1xxx ou d'un alliage d'aluminium de type 3xxx ou 8xxx.

3. Matériau composite d'aluminium selon les revendications 1 ou 2,
**caractérisé en ce que** les épaisseurs de couche des couches extérieures en alliage d'aluminium (2, 3) représentent 1 % à 12 %, de préférence 3 % à 8 %, de l'épaisseur totale du matériau composite d'aluminium (1).

4. Utilisation du matériau composite d'aluminium selon l'une des revendications 1 à 3 dans la construction de véhicules, la construction aéronautique, la construction navale et la construction de véhicules ferroviaires, notamment en tant que tôle de carrosserie dans la construction de véhicules automobiles.

5. Procédé de fabrication d'un matériau composite d'aluminium comportant une couche centrale en alliage d'aluminium pourvue d'au mois une couche extérieure en alliage d'aluminium située sur un côté ou sur les deux selon l'une des revendications 1 à 3, dans lequel on met en oeuvre, pour ladite couche centrale en alliage d'aluminium, un lingot central constitué d'un alliage d'aluminium présentant les composants d'alliage suivants, en pour cent en poids
| | | |
|---|---|---|
| 3,5 % < | Mg | ≤ 7,0 %, |
| | Mn | ≤ 1,0 %, |
| | Fe | ≤ 0,5 %, |
| | Si | ≤ 0,4 %, |
| | Cu | ≤ 0,15 %, |
| | Cr | ≤ 0,25 %, |
| | Zn | ≤ 0,25 %, |
| | Ti | ≤ 0,2 %, |
le reste étant de l'Al et des impuretés inévitables dont chacune représente au maximum 0,05 %, leur somme représentant au maximum 0,15 %, et, pour ladite au moins une couche extérieure en alliage d'aluminium, un matériau de placage constitué d'aluminium ou d'un alliage d'aluminium présentant les composants d'alliage suivants, en pour cent en poids :
| | |
|---|---|
| Mg | ≤ 1,1 %, |
| Mn | ≤ 1,3 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |
le reste étant de l'aluminium et des impuretés dont chacune représente au maximum 0,05 %, leur somme représentant au maximum 0,15 %,
le matériau de placage mis en oeuvre pour la couche extérieure en alliage d'aluminium est appliqué sur au moins un côté dudit lingot central constitué de l'alliage central d'aluminium, au moins une passe sans réduction d'épaisseur est réalisée dans un sens de laminage durant le placage par laminage avec inversion que subit le lingot central après application dudit matériau de placage, une couche intermédiaire étant mis oeuvre entre la couche extérieure en alliage d'aluminium et la couche centrale en alliage d'aluminium, ladite couche intermédiaire en alliage d'aluminium présentant une teneur en Mg inférieure par rapport à la couche extérieure en alliage d'aluminium, et les deux couches étant appliquées par placage sur le lingot central.

6. Procédé selon la revendication 5,
**caractérisé en ce que**, durant le placage par laminage avec inversion, on réalise une passe sans réduction d'épaisseur dans un sens de laminage jusqu'à ce que ledit matériau de placage soit solidement soudé à ladite couche centrale en alliage d'aluminium.

7. Procédé selon les revendications 5 ou 6,
**caractérisé en ce que** ledit matériau composite d'aluminium est fabriqué en appliquant par placage un matériau de placage composite, ledit matériau de placage composite fournissant à la fois ladite couche intermédiaire et ladite couche extérieure en alliage d'aluminium.

8. Procédé selon l'une des revendications 5 à 7,
**caractérisé en ce que** ledit matériau de placage est soudé audit lingot central au moyen d'une soudure située sur le côté le plus court du lingot central.

9. Procédé selon l'une des revendications 5 à 8,
**caractérisé en ce que** ledit matériau de placage présente, au début du placage par laminage, une longueur inférieure par rapport audit lingot central, la différence de longueur représentant préférentiellement 3 % à 20 % de la longueur totale du lingot central.

10. Procédé selon l'une des revendications 5 à 9,
**caractérisé en ce qu'**après le placage par laminage, la bande constituée dudit matériau composite d'aluminium subit un laminage à froid, avec ou sans recuit intermédiaire et, enfin, optionnellement un recuit d'adoucissement.

11. Procédé selon l'une des revendications 5 à 10,
**caractérisé en ce que** ledit matériau composite d'aluminium est laminé jusqu'à ce qu'elle présente une épaisseur finale comprise entre 0,5 mm et 2,5 mm.
